# EUROPEAN PATENT APPLICATION

(11) **EP 4 610 810 A1**
(43) Date of publication of application: **03.09.2025**
(21) Application number: 25160722.2
(22) Date of filing: 27.02.2025
(51) Int. Cl.: G06F 8/41, G06T 1/20, G06T 15/00, G06T 15/80

(54) **REGISTER ALLOCATION FOR MULTI-PHASE TASK**

(30) Priority: 29.02.2024 GB 202402925
(71) Applicant: Imagination Technologies Limited, Kings Langley, Hertfordshire WD4 8LZ (GB)
(72) Inventor: De Lucas, Enrique, Hertfordshire, WD4 8LZ (GB)
(74) Representative: Elkington and Fife LLP

(57) **Abstract**

Within a graphical processing system a plurality of different shading programs may be executed by a single processor over multiple threads. For each shading program a plurality of registers are used to store data for the respective shading program. Thus, for multiple shading programs executed over multiple threads a plurality of registers are allocated to each program, or thread, being executed. However, there are a limited number of registers available and therefore efficient allocation of the registers optimises performance. Often an unnecessary number of registers is allocated to each shading program but the present invention provides a method of allocating the correct number of registers based on the size of the fragments being shaded.

## Description

This application claims priority from UK patent application 2402925.8 filed on 29 February 2024.

### TECHNICAL FIELD

The present disclosure relates to graphics processing systems, in particular those implementing variable fragment shading rates.

### BACKGROUND

Graphics processing systems are typically configured to receive graphics data, e.g. from an application running on a computer system, and to render the graphics data to provide a rendering output. For example, the graphics data provided to a graphics processing system may describe geometry within a three dimensional (3D) scene to be rendered, and the rendering output may be a rendered image of the scene. Some graphics processing systems (which may be referred to as "tile-based" graphics processing systems) use a rendering space which is subdivided into a plurality of tiles. The "tiles" are sections of the rendering space, and may have any suitable shape, but are typically rectangular (where the term "rectangular" includes square). As is known in the art, there are many benefits to subdividing the rendering space into tile sections. For example, subdividing the rendering space into tile sections allows an image to be rendered in a tile-by-tile manner, wherein graphics data for a tile can be temporarily stored "on-chip" during the rendering of the tile, thereby reducing the amount of data transferred between a system memory and a chip on which a graphics processing unit (GPU) of the graphics processing system is implemented.

Tile-based graphics processing systems typically operate in two phases: a geometry processing phase and a rendering phase. In the geometry processing phase, the graphics data for a render is analysed to determine, for each of the tiles, which graphics data items are present within that tile. The graphics data items may include geometric primitives such as triangles. Then in the rendering phase (e.g. a rasterisation phase), a particular tile can be rendered by processing those graphics data items which are determined to be present within that tile (without needing to process graphics data items which were determined in the geometry processing phase to not be present within the particular tile).

When rendering an image graphics data items are sampled to determine coverage, e.g, to determine which pixels of a tile are covered by a triangular primitive. A fragment may be generated for each sample position, and fragments are shaded to determine the colours of the pixels of the image. It is known that the render may use more sample points than the number of pixels with which an output image will be represented. This multi-sampling can be useful for anti-aliasing purposes, and is typically specified to a graphics processing pipeline as a constant (i.e. a single anti-aliasing rate) for the entire image.

More recently, the idea of variable fragment shading rates has been considered. Here, a render may generate and shade fewer fragments than the number of coverage samples generated during the sampling process, with each fragment corresponding to a plurality of coverage samples. This may be termed 'sub-sampling'. The result of shading one larger fragment may then be used to determine the image colour at more than one coverage sample location. Moreover, different parts of the same image may have different fragment shading rates. Lower fragment shading rates (or sub-sampling) may also be used together with over-sampling for anti-aliasing. For example, over-sampling may improve the appearance of the edges of objects in the rendered image due to the higher coverage sampling rate, while sub-sampling may improve the performance (e.g. for higher speed or lower power consumption) of the shading process, particularly when rendering areas of uniformity or low importance parts of the image.

Different fragment shading rates may require different resources. In particular, different fragment shading rates may require different numbers of registers based on the size of the fragment (i.e. the number of coverage samples the fragment corresponds to). Currently registers are allocated based on the largest possible fragment size (i.e. the largest number of coverage samples that a fragment could correspond to). Therefore, although variable fragment shading rates may be useful to reflect the complexity or simplicity in different parts of the image the register allocation is based on the largest fragment size. This consumes significant resources and can then impede processor performance.

Furthermore, in the shading process there are some functions which are executed only once per fragment and some operations which are carried out once per pixel or sample point. It is therefore possible for the shading process to be a dual phase task: one phase executed once per fragment and one phase executed once per sample point.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

Within a graphical processing system a plurality of different shading programs may be executed by a single processor over multiple threads. For each shading program a plurality of registers are used to store data for the respective shading program. Thus, for multiple shading programs executed over multiple threads a plurality of registers are allocated to each program, or thread, being executed. However, there are a limited number of registers available and therefore efficient allocation of the registers optimises performance. Often an unnecessary number of registers is allocated to each shading program but the present invention provides a method of allocating the correct number of registers based on the size of the fragments being shaded.

According to a first aspect there is provided a method of rendering in a graphics processing system, the method comprising: compiling a program for a dual phase fragment task by a compiler, the first phase of the program being executed at a fragment rate and the second phase or the program being executed at a sample rate, the compiler being configured to provide data comprising the number of registers required per fragment in the first phase, the number of registers common between the first and second phase per fragment and the number of registers required per sample for the second phase to a processor; providing, by the compiler to a processor, the compiled program and data comprising the number of registers required per fragment in the first phase, the number of registers common between the first and second phase per fragment and the number of registers required per sample for the second phase; providing a fragment shading rate value to the processor; and computing, by the processor, the number of registers needed per fragment based on at least the number of registers required per fragment in the first phase, the number of registers per fragment common between the first and second phase and the number of registers required per sample for the second phase in the compiled program and the fragment shading rate value.

Optionally, the method further comprises allocating, by the processor, the computed number of registers to the dual phase fragment task for each fragment.

Optionally, the number of registers required per fragment is the maximum of:
the registers required per fragment in the first phase; and
the number of registers required per fragment for the second phase wherein the number of registers required for the second phase comprises registers per fragment common between the first and second phase plus the number of registers required per sample for the second phase in the compiled program multiplied by the samples per fragment,
wherein the samples per fragment is based on the fragment shading rate.

Optionally, each fragment has a multisampling level per pixel and the method further comprises providing a multisampling level per pixel to the processor and wherein the samples per fragment comprises the multisampling level per pixel multiplied by the fragment size.

Optionally, the method further comprises setting a maximum number of registers required per fragment in the second phase.

Optionally, the method further comprises computing a fragment shading rate.

Optionally, the compiler is configured to provide a program data sequencer program comprising data fields: the number of registers, required per fragment in the first phase, the number of registers common between the first and second phase per fragment and the number of registers required per sample for the second phase.

Optionally, the method further comprises providing a second fragment shading rate value to the processor; and computing, by the processor, the number of registers needed per fragment for a second execution of the program based on the number of registers required per fragment in the first phase, the number of registers per fragment common between the first and second phase and the number of registers required per sample for the second phase in the compiled program and the second fragment shading rate value.

According to a second aspect of the invention there is provided a graphics processing system configured to render a scene formed of primitives, wherein the graphics processing system comprises logic configured to: compile for a dual phase fragment task by a compiler, the first phase of the program being executed at a fragment rate and the second phase or the program being executed at a sample rate, the compiler being configured to provide the number of registers required per fragment in the first phase, the number of registers common between the first and second phase per fragment and the number of registers required per sample for the second phase; provide the compiled program to a processor, the compiled program and data comprising the number of registers required per fragment in the first phase, the number of registers common between the first and second phase per fragment and the number of registers required per sample for the second phase; provide a fragment shading rate value to the processor; compute, by the processor, the number of registers needed per fragment based on the number of registers required per fragment in the first phase, the number of registers per fragment common between the first and second phase and the number of registers required per sample for the second phase in the compiled program and the fragment shading rate value.

Optionally, the logic is further configured to allocate the computed number of registers to the dual phase fragment task for each fragment.

Optionally, the number of registers required per fragment is the maximum of:
the registers required per fragment in the first phase; and
the number of registers required per fragment for the second phase wherein the number of registers required for the second phase comprises registers per fragment common between the first and second phase plus the number of registers required per sample for the second phase in the compiled program multiplied by the samples per fragment, wherein the samples per fragment is based on the fragment shading rate.

Optionally, each fragment has a multisampling level per pixel wherein the logic is further configured to provide a multisampling level per pixel to a processor, and wherein the samples per fragment comprises the multisampling level per pixel multiplied by the fragment size.

Optionally, the logic is further configured to set a maximum number of registers required per fragment in the second phase.

Optionally, the compiler is configured to provide a program data sequencer program comprising data fields comprising data fields: the number of registers required per fragment in the first phase; the number of registers common between the first and second phase per fragment; and the number of registers required per sample for the second phase.

Optionally, the logic is further configured to provide a second fragment shading rate value to the processor; and compute, by the processor, the number of registers needed per fragment for a second execution of the program based on the number of registers required per fragment in the first phase, the number of registers per fragment common between the first and second phase and the number of registers required per sample for the second phase in the compiled program and the second fragment shading rate value.

Optionally, the compiler provides a plurality of data fields, distinct from the compiled program, to the processor, the data fields comprising: the number of registers required per fragment in the first phase; the number of registers common between the first and second phase per fragment; and the number of registers required per sample for the second phase.

Optionally, the graphics processing system comprises a CPU configured to compile the dual phase fragment task; and a GPU configured to compute the number of registers needed

According to a third aspect there may be provided a graphics processing system configured to perform the method of the first aspect or any of the aforementioned variations.

The graphics processing system may be embodied in hardware on an integrated circuit. There may be provided a method of manufacturing, at an integrated circuit manufacturing system, a graphics processing system. There may be provided an integrated circuit definition dataset that, when processed in an integrated circuit manufacturing system, configures the system to manufacture a graphics processing system. There may be provided a non-transitory computer readable storage medium having stored thereon a computer readable description of a graphics processing system that, when processed in an integrated circuit manufacturing system, causes the integrated circuit manufacturing system to manufacture an integrated circuit embodying a graphics processing system.

There may be provided an integrated circuit manufacturing system comprising: a non-transitory computer readable storage medium having stored thereon a computer readable description of the graphics processing system; a layout processing system configured to process the computer readable description so as to generate a circuit layout description of an integrated circuit embodying the graphics processing system; and an integrated circuit generation system configured to manufacture the graphics processing system according to the circuit layout description.

There may be provided computer program code for performing any of the methods described herein. There may be provided non-transitory computer readable storage medium having stored thereon computer readable instructions that, when executed at a computer system, cause the computer system to perform any of the methods described herein.

The above features may be combined as appropriate, as would be apparent to a skilled person, and may be combined with any of the aspects of the examples described herein.

### BRIEF DESCRIPTION OF THE DRAWINGS

Examples will now be described in detail with reference to the accompanying drawings in which:
Figure 1 shows a graphics processing system;
Figure 2 shows a method that can be implemented by a graphics processing system such as that of Fig. 1;
Figure 3 illustrates how a graphics processing system can process a primitive for shading with a 1x1 fragment shading rate;
Figure 4 illustrates how a graphics processing system can process a primitive for shading with a 2x2 fragment shading rate;
Figure 5 illustrates a multithreaded texturing/shading unit;
Figure 6 shows a method of computing the number of registers required per fragment;
Figure 7 shows an alternative method of computing the number of registers required per fragment;
Figure 8 depicts program data sequencer program;
Figure 9 shows a computer system in which a graphics processing system is implemented; and
Figure 10 shows an integrated circuit manufacturing system for generating an integrated circuit embodying a graphics processing system.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

### DETAILED DESCRIPTION

The following description is presented by way of example to enable a person skilled in the art to make and use the invention The present invention is not limited to the embodiments described herein and various modifications to the disclosed embodiments will be apparent to those skilled in the art.

The use of different fragment shading rates, as mentioned above, gives greater flexibility in how fragments are shaded by a graphics processing system. In this document the phrase 'fragment shading rate' (and the abbreviation 'FSR') may be used to denote both a particular technique for providing different rates for performing fragment shading, and to denote particular fragment shading rate settings or values. The relevant meaning can be distinguished by the associated use of the terms "technique" or "value" as appropriate, but in general the relevant meaning will be clear to the skilled person from the context.

When a GPU perform rendering based on a shader program, part of the rendering process may be executed once per fragment and part of the process may be executed once per sample point. As mentioned above, for each shading program a plurality of registers are used to store data for the respective shading program, and there are a limited number of registers available. For a dual phase task, the first part of the process requires register(s) per fragment whereas the second part requires register(s) per sample.

If fragment sizes are all identical the number of registers needed is known because the sample number per fragment is known. However, fragment sizes can vary. As an example, fragment sizes can depend on the pipeline fragment shading rate (based on the object as a whole), the primitive fragment shading rate (based on the specific primitive) or the attachment fragment shading rate (based on the location within the overall frame). Thus, even within a single primitive, there may be different fragment sizes.

A single shading program is used to shade a primitive, and this is compiled by a compiler, generally in a CPU outside a GPU. The compilation time is significant and compilation is therefore completed in advance. In particular, the compilation is begun before the FSR value for a given fragment is known. The compilation includes defining the number of registers used by the program.

The FSR value is not known at the time of compilation so current systems set an overall maximum number of samples per fragment and the program is compiled on the basis of the maximum possible number of samples per fragment. Registers are allocated on the basis of the compiled program and therefore with the maximum number of samples per fragment. However, if the samples per fragment are fewer than the maximum there may be many redundant registers.

There are a finite number of registers available and therefore allocating registers which may be unused unnecessarily occupies registers. To optimise efficiency the texturing/shading unit completes multiple interleaved threads. Thus, the finite number of registers may limit the number of tasks and result in inefficiency within the texturing/shading unit.

One possibility would be to compile different programs for different fragment shading rates and only the compiled program with the required FSR would be used. However, this would require a large number of compiled programs which may become cumbersome and require large computational resources to compile.

An alternative possibility would be to wait to compile the shading program until the FSR value is known. However, compiling the program is a relatively lengthy process so this would significantly slow the overall process.

The present disclosure presents a way in which the number of registers can be correctly allocated without the impeding or slowing the overall process.

Embodiments will now be described by way of example only.

### General System

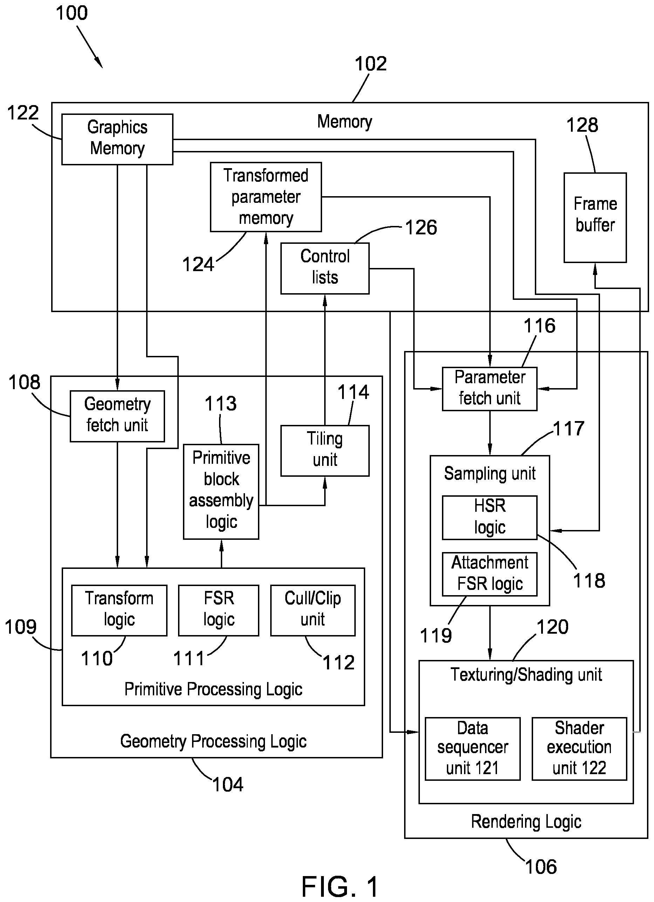

Fig. 1 shows an example graphics processing system 100. The example graphics processing system 100 is a tile-based graphics processing system. As mentioned above, a tile-based graphics processing system uses a rendering space which is subdivided into a plurality of tiles. The tiles are sections of the rendering space, and may have any suitable shape, but are typically rectangular (where the term "rectangular" includes square). The tile sections within a rendering space are conventionally the same shape and size.

The system 100 comprises a memory 102, geometry processing logic 104 and rendering logic 106. The geometry processing logic 104 and the rendering logic 106 may be implemented on a GPU and may share some processing resources, as is known in the art. The geometry processing logic 104 comprises a geometry fetch unit 108; primitive processing logic 109, which in turn comprises geometry transform logic 110, FSR logic 111 and a cull/clip unit 112; primitive block assembly logic 113; and a tiling unit 114. The rendering logic 106 comprises a parameter fetch unit 116; a sampling unit 117 comprising hidden surface removal (HSR) logic 118; and a texturing/shading unit 120. The example system 100 is a so-called "deferred rendering" system, because the texturing/shading is performed after the hidden surface removal. However, a tile-based system does not need to be a deferred rendering system, and although the present disclosure uses a tile-based deferred rendering system as an example, the ideas presented are also applicable to non-deferred (known as immediate mode) rendering systems or non-tile-based systems. The memory 102 may be implemented as one or more physical blocks of memory and includes a graphics memory 122; a transformed parameter memory 124; a control lists memory 126; and a frame buffer 128.

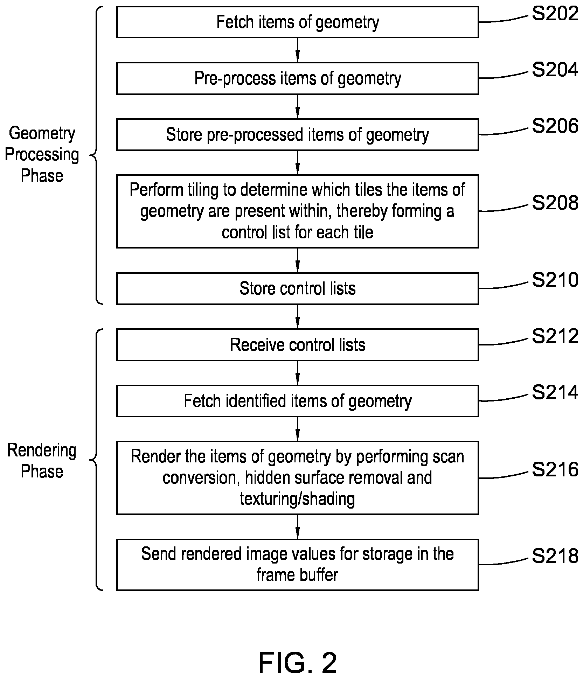

Fig. 2 shows a flow chart for a method of operating a tile-based rendering system, such as the system shown in Fig. 1. The geometry processing logic 104 performs the geometry processing phase, in which the geometry fetch unit 108 fetches geometry data (e.g. previously received from an application for which the rendering is being performed) from the graphics memory 122 (in step S202) and passes the fetched data to the primitive processing logic 109. The geometry data comprises graphics data items (i.e. items of geometry) which describe geometry to be rendered. For example, the items of geometry may represent geometric shapes, which describe surfaces of structures in the scene. The items of geometry may be in the form of primitives (commonly triangles, but primitives may be other 2D shapes and may also be lines or points to which a texture can be applied). Primitives can be defined by their vertices, and vertex data can be provided describing the vertices, wherein a combination of vertices describes a primitive (e.g. a triangular primitive is defined by vertex data for three vertices). Objects can be composed of one or more such primitives. In some examples, objects can be composed of many thousands, or even millions of such primitives. Scenes typically contain many objects. Items of geometry can also be meshes (formed from a plurality of primitives, such as quads which comprise two triangular primitives which share one edge). Items of geometry may also be patches, wherein a patch is described by control points, and wherein a patch is tessellated to generate a plurality of tessellated primitives.

In step S204 the geometry processing logic 104 pre-processes the items of geometry, e.g. by transforming the items of geometry into screen space, performing vertex shading, performing geometry shading and/or performing tessellation, as appropriate for the respective items of geometry. In particular, the primitive processing logic 109 (and its sub-units) may operate on the items of geometry, and in doing so may make use of state information retrieved from the graphics memory 122. For example, the transform logic 110 in the primitive processing logic 109 may transform the items of geometry into the rendering space and may apply lighting/attribute processing as is known in the art. The resulting data may be passed to the cull/clip unit 112 which may cull and/or clip any geometry which falls outside of a viewing frustum. The remaining transformed items of geometry (e.g. primitives) are provided from the primitive processing logic 109 to the primitive block assembly logic 113 which groups the items of geometry into blocks, also be referred to as "primitive blocks", for storage. A primitive block is a data structure in which data associated with one or more primitives (e.g. the transformed geometry data related thereto) are stored together. For example, each block may comprise up to N primitives, and up to M vertices, where the values of N and M are an implementation design choice. For example, N might be 24 and M might be 16. Each block can be associated with a block ID such that the blocks can be identified and referenced easily. Primitives often share vertices with other primitives, so storing the vertices for primitives in blocks allows the vertex data to be stored once in the block, wherein multiple primitives in the primitive block can reference the same vertex data in the block. In step S206 the primitive blocks with the transformed geometric data items are provided to the memory 102 for storage in the transformed parameter memory 124. The transformed items of geometry and information regarding how they are packed into the primitive blocks are also provided to the tiling unit 114. In step S208, the tiling unit 114 generates control stream data for each of the tiles of the rendering space, wherein the control stream data for a tile includes a control list of identifiers of transformed primitives which are to be used for rendering the tile, i.e. a list of identifiers of transformed primitives which are positioned at least partially within the tile. The collection of control lists of identifiers of transformed primitives for individual tiles may be referred to as a "control stream list" or "display list". In step S210, the control stream data for the tiles is provided to the memory 102 for storage in the control lists memory 126. Therefore, following the geometry processing phase (i.e. after step S210), the transformed primitives to be rendered are stored in the transformed parameter memory 124 and the control stream data indicating which of the transformed primitives are present in each of the tiles is stored in the control lists memory 126. In other words, for given items of geometry, the geometry processing phase is completed and the results of that phase are stored in memory before the rendering phase begins.

In the rendering phase, the rendering logic 106 renders the items of geometry (primitives) in a tile-by-tile manner. In step S212, the parameter fetch unit 116 receives the control stream data for a tile, and in step S214 the parameter fetch unit 116 fetches the indicated transformed primitives from the transformed parameter memory 124, as indicated by the control stream data for the tile. In step S216 the rendering logic 106 renders the fetched primitives by performing sampling on the primitives to determine primitive fragments which represent the primitives at discrete sample points within the tile, and then performing hidden surface removal and texturing/shading on the primitive fragments. In particular, the fetched transformed primitives are provided to the sampling unit 117 (which may also access state information, either from the graphics memory, or stored with the transformed primitives), which performs sampling and determines the primitive fragments to be shaded. As part of determining the primitive fragments to be shaded, the sampling unit 117 uses hidden surface removal (HSR) logic 118 to remove primitive fragments which are hidden (e.g. hidden by other primitive samples). Methods of performing sampling and hidden surface removal are known in the art. For a conventional system using one sample point per pixel, the term "fragment" refers to a sample of a primitive at a sampling point, which is to be shaded to assist with determining how to render a pixel of an image. However, with variable FSR, there may not be a one to one correspondence between the fragments generated by sampling, and the fragments that are shaded. Therefore, the terms "coverage samples" (fragments created by sampling primitives) and "shader fragments" (fragments upon which shader programs are executed) are used herein where it is necessary to distinguish between fragments at different units of the GPU. For example, one shader fragment may be processed to determine colour values for more than one coverage sample. The term "sampling" is used herein to describe the process of generating discrete fragments (coverage samples) from items of geometry (e.g. primitives), but this process can sometimes be referred to as "rasterisation" or "scan conversion". As mentioned above, the system 100 of Fig. 1 is a deferred rendering system, and so the hidden surface removal is performed before the texturing/shading. However, other systems may render fragments before performing hidden surface removal to determine which fragments are visible in the scene.

Coverage fragments which are not removed by the HSR logic 118 are provided from the sampling unit 117 to the texturing/shading unit 120, where, as shader fragments, texturing and/or shading is applied. The texturing/shading unit 120 is typically configured to efficiently process multiple fragments in parallel. This can be done by determining individual fragments that require the same processing (e.g. need to run the same shader program on the texturing/shading unit 120) and treating them as instances of the same task, which are then run in parallel, in a SIMD (single instruction, multiple data) processor for example. To assist with this, in some implementations, coverage fragments from the same primitive may be provided to the texturing/shading unit 120 in so-called 'microtiles', being groups of coverage fragments. A microtile may correspond to, for example, a 4x4 array of sample points corresponding to a particular area of the render space, and thus may include up to 16 coverage samples (depending on the primitive coverage within the microtile), and thus up to 16 task instances, if each coverage sample is shaded as one shader fragment. It will be understood that these microtiles are separate to the 'tiles' used in tile-based rendering. As explained above, a tile is a sub-division of the overall render space for which the graphics data can be temporarily stored "on-chip" during the rendering of the tile. A microtile represents the sampling (and optionally hidden surface removal) result of part or all of a particular primitive. In other words, several microtiles may represent a single primitive, and many primitives may be present in a single tile.

Although it is not shown in Fig. 1, the texturing/shading unit 120 may receive texture data from the memory 102 in order to apply texturing to the primitive fragments, as is known in the art. The texturing/shading unit 120 may apply further processing to the primitive fragments (e.g. alpha blending and other processes), as is known in the art in order to determine rendered pixel values of an image. The rendering phase is performed for each of the tiles, such that a whole image can be rendered with pixel values for the whole image being determined. In step S218, the rendered pixel values are provided to the memory 102 for storage in the frame buffer 128. The rendered image can then be used in any suitable manner, e.g. displayed on a display, or stored in memory or transmitted to another device, etc.

### Interaction of FSR with General System

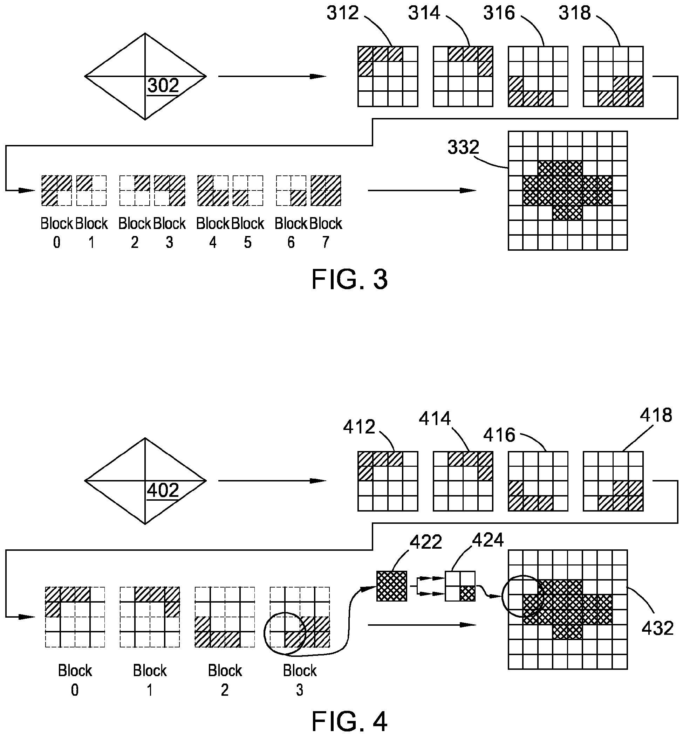

Figs 3 and 4 illustrate how different fragment shading rate values can affect the workload on the general processing system set out above.

Fig. 3 illustrates the simplest situation of using a 1x1 fragment shading rate value, in which each shader fragment instance corresponds to one coverage sample. In the example, an object 302 is formed by four right-angular triangle primitives meeting at the centre of the object. During rasterisation, it is determined that the object 302 covers four microtiles 312, 314, 316 & 318 (a microtile being, in this example, a 4x4 array of coverage samples). In the example, each primitive is in a single microtile for ease of understanding, but this need not be the case in practice. The coverage sample coverage within each microtile 312, 314, 316 & 318 is determined and indicated by the cross-hatching. In this example, using a 1x1 FSR value, each coverage sample corresponds to a shader fragment that is shaded individually during rasterisation, and so corresponds to one shading task instance. In this example, the shader fragments are grouped into blocks of instances (Blocks 0 to 7 in Fig. 3) for shading in parallel. In this example, 2x2 instances from the microtiles 312, 314, 316 & 318 are grouped into a block (i.e. Blocks 0 & 1 are derived from microtile 312, Blocks 2 & 3 are derived from microtile 314, Blocks 4 & 5 are derived from microtile 316, Blocks 6 & 7 are derived from microtile 318), but this depends on the configuration of the texturing/shading unit. To emphasise that each shader fragment, despite the block grouping, is shaded individually, a dashed box is shown around each shader fragment in each of the blocks. As such, the contents of each dashed box can be considered to be a task instance to be processed (i.e. shaded) by texturing/shading unit 120. After shading, in this simple example, the shading results can be directly combined to form the output 332 (in which the fact that the fragments have been processed is indicated by use of a different cross-hatching).

In contrast, Fig. 4 illustrates the use of a 2x2 fragment shading rate value, in which each shader fragment corresponds to 2x2 coverage samples. The example begins in a similar way to the Fig. 3 example, with the primitives forming object 402 being determined to cover four microtiles 412, 414, 416 & 418. Again, each microtile 412, 414, 416 & 418 in the example corresponds to an array of 4x4 sample points. Again, the coverage sample coverage within each microtile is indicated by the cross-hatching. Whilst this 4x4 sampler granularity is retained for coverage information (as will be seen later), the 2x2 fragment shading rate value means that the shader fragments and therefore the task instances for shading are created from 2x2 sets of coverage samples, which are then grouped into blocks (Blocks 0 to 3 in Fig. 4, with Block 0 being derived from microtile 412, Block 1 being derived from microtile 414, Block 2 being derived from microtile 416, Block 3 being derived from microtile 418). As in Fig. 3, dashed boxes have been shown around each shader fragment in the blocks in Fig. 4. However, in contrast to Fig. 3, it will be seen that the content of each dashed box corresponds to four (that is: 2x2) of the original coverage samples from microtiles 412, 414, 416 & 418. A single shader task instance is run for each dashed box. Put another way, shader fragments are created with each fragment corresponding to four original coverage samples, and a single shading task is created for each shader fragment. As shown for one of the dashed boxes from Block 3, this produces a single shading result 422 corresponding to the original coverage samples for which the task instance was constructed. That single shading result 422 can then be recombined with the coverage information (e.g. as shown in microtiles 412, 414, 416 & 418) to produce a set of appropriately shaded fragments 424 at the same spatial resolution as the original set of 2x2 coverage samples (in the illustrated example, this results in a single shaded fragment at that resolution). After performing a similar process for each task instance, the shaded fragments can be combined to form the output 432. In other words, although the 'coarser' shader fragment size in this example causes coverage samples to be grouped together to be shaded, in a way that can also cover sample points which may not actually be covered by the primitive being shaded, the shading results 422 are applied only at the sample positions known to be covered, meaning that the outputs 332 & 432 from Figs 3 and 4 are the same in terms of spatial coverage. However, fewer task instances need to be processed to achieve the same (in terms of spatial coverage) output, leading to greater processing efficiency. That can be seen by comparing the number of dashed boxes in the blocks of Fig. 3 compared to those in Fig. 4 - Fig. 3 requires 32 dashed boxes (shader task instances) whereas Fig. 4 only requires 16. On the other hand, that processing efficiency comes at a loss of spatial resolution when determining shading results. That is, although the outputs 332 and 432 may have the same spatial coverage, there may be less variation in the shading results within the covered area in the output of Fig. 4. There may not be any noticeable difference, depending on the uniformity of the area covered, and it is thus up to the programmer to judge when such loss of spatial resolution in the shading results are an acceptable trade-off for increased processing efficiency.

It will be noted that in Fig. 3, there are some task instances (dashed boxes) in Blocks 0-6 which do not contain any coverage samples and so do not actually require shading. Similarly, in Fig. 4, there are task instances in Blocks 0-3 which do not contain any coverage samples that require shading. Such 'empty' or 'helper' instances can be created if the system architecture expects to receive blocks containing a certain number of task instances (e.g. 2x2 instances in the examples presented). Whilst systems such as SIMD systems are most efficient when every instance being processed is 'useful' work, the system can still operate by using such helper instances, and can still operate (overall) more efficiently that a system which does not exploit parallelism.

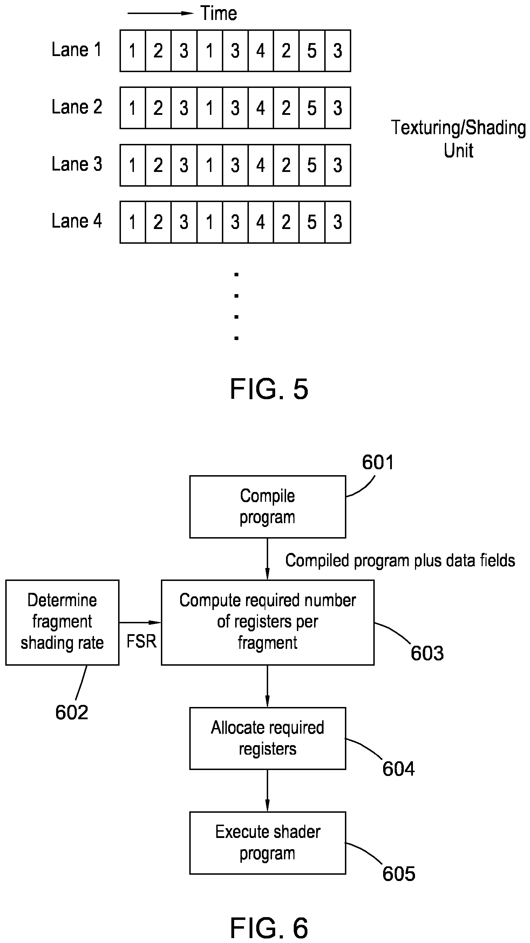

Shading is often carried out by a specific programmable processor, which in some systems may be termed a shader, and corresponds to the texturing/shading unit 120 of Fig. 1. In many examples this is a single instruction multiple data (SIMD) processor so that the same instructions can be carried out on, for example, multiple fragments. The specific programmable processor is often a multi-threaded processor which carries out multiple tasks and this is depicted in Fig 5 which depicts a plurality of tasks: task 1, task 2, task 3, task 4 and task 5 each being carried at different times. There are four different lanes, and each lane performs a different instance of the same task from the same shader program. For example, each lane performs the same shading program on a different instance. The use of multiple threads (i.e. tasks) enables resources of the texturing/shading unit 120 to be optimised and minimise, or avoid, inefficiency.

A large number of different programs may be executed by the texturing/shading unit 120 and, prior to a program being executed resources must be allocated to the program. In particular, registers must be allocated to the program. There are a limited number of registers available for the texturing/shading unit 120 and if the registers are all allocated then number of threads may be limited and inefficiency of the texturing/shading unit 120 may occur.

For any given application there are a plurality of shading programs and different shading programs operate, for example, to shade different surfaces. When a particular shading program is identified it is compiled. Compiling is a resource intensive task that often takes place outside a GPU. In particular, compiling is time consuming and is therefore commenced soon after as the shading program is identified. This may be, for example, while sampling of a primitive is occurring.

As is described above, part of a shading task may relate to functions carried out once per fragment and part of the task may relate to functions carried out once per sample. The number of samples per fragment will vary according to the fragment shading rate computed for the particular task.

For parts of the task carried out once per fragment the number of registers required is proportional to the number of fragments. For parts of the task carried out once per sample the number of registers required is proportional to the number of samples per fragment.

Figure 6 depicts a method of the invention in which rendering using a dual phase fragment task shader program occurs. Once a shading program has been identified it is compiled at step 601. Often this occurs on a separate CPU but it can also occur on the GPU. As described above, the compiling of the program can take a significant time and so compilation of programs is usually commenced as soon as the shader program is identified. During compilation of the program the number of required registers is not computed. Instead, three data fields are used: the first data field relates to the number of registers required per fragment in the first phase, the second data field relates to the number of registers common between the first and second phase per fragment. Finally, the third field relates to the number of registers required per sample for the second phase. These data fields will vary according to the specific shader program.

The texturing/shading unit 120 may comprise a data sequencer unit 121 and a shader execution unit 122. The data sequencer unit 121 may be used to assemble the tasks from the plurality of instances generated by the sampling process previously discussed. The data sequencer may be programmable, based on the requirements of the shader programs for example. The data sequencer transmits the assembled tasks to the shader execution unit 122.

The three data fields may be provided to the data sequencer unit (perhaps as part of the data sequencer program, perhaps separately), which may calculate the number of required registers and transmit the calculated number to the shader execution unit 122 with the assembled task. In that case, upon receiving the transmission from the data sequencer unit, the shader execution unit 122 can begin to allocate resources as necessary. Alternatively, the data sequencer unit 121 may not calculate the number of required registers from the three data fields and instead pass on the information from those data fields to the shader execution unit 122; shader execution unit 122 may then calculate the number of registers required from those three fields and then allocate resources accordingly. In a further alternative, the three data fields may be supplied directly to the shader execution unit 122 (in other words, not via the data sequencer unit), and again the shader execution unit 122 may then calculate the number of registers required from those three fields before allocating resources accordingly. In all those alternatives, the allocation of resources happens at the shader execution unit 122, meaning it occurs as late as possible compared to when the tasks are processed, thereby minimising the amount of time resources are allocated for. In a less preferable alternative, it may be that the data sequencer unit 121 not only calculates the number of registers required but is also responsible for allocating them. This alternative will still benefit from the fact that the more accurate number of registers is calculated and allocated but will result in an earlier allocation than if the shader execution unit 122 made the allocation, and therefore will be less efficient than the other alternatives.

Step 602 depicts the fragment shading rate being determined. This can occur at the same time, before or after the program is being compiled. In this example, there is a single sample per pixel and therefore number of samples per fragment is the same as the fragment shading rate.

The fragment shading rate can simply be obtained from a known storage location. However, fragment shading rates sometimes depend on one or more of: a pipeline fragment shading rate value; a primitive fragment shading rate value and an attachment fragment shading rate value. One or more of these can be combined to determine the fragment shading rate to be used in the example depicted in Figure 6. Examples of combinations of fragment shading rate are described in EP4,116,932.

Returning to Figure 6, at step 603 the required number of registers per fragment is calculated as the maximum of:
the number of registers required per fragment in the first phase; and
the number of registers common between the first and second phase per fragment plus the number of registers required per sample for the second phase multiplied by the number of samples per fragment.

The first part relates to the number of registers required in the first phase of the task. Some of the data, and registers are used for both the first and second phases. However, the registers in which data used in the first phase but not the second phase is stored can be used for fresh data during the second phase. Thus, the number of registers required for the second phase is the number of common registers (i.e. the registers used for both the first and second phases) and the number of additional registers required by the second phase alone.

The registers required per fragment can be written as: number of registers per fragment = Max (number of registers per fragment in the first phase, the number of common registers + number of registers per sample * number of samples per fragment). In Figure 6, there is no multisampling, and so the number of samples per fragment is determined by the FSR value.

The required number of registers computed at step 603 is the number of registers required per fragment. With the number of fragments on which the shader program is due to be executed known the total number of registers required is known. At step 604 the total number of registers required are allocated.

Steps 603 and 604 may be performed by the texturing /shading unit 120 of the system of Fig. 1. It will be apparent from the discussion above that either: steps 603 and 604 could both be performed by the data sequencer unit 121, or could both be performed by the shader execution unit 122 or step 603 could be performed by the data sequencer unit 121 and step 604 could be performed by the shader execution unit 122.

At step 605 the shader program is executed by the texturing/shading unit 120 using the allocated registers.

Advantageously, using the method of the present invention, the registers required per fragment can be accurately computed and consequently there is no over-allocation.

The shader program is compiled and the compiled shader program can be used for a range of fragment shading rate values. Thus, when a second fragment shading rate is needed the required number of registers per fragment can be computed in the same way and registers allocated. The program does not need to be compiled again and can be executed a second time. This saves considerable resources previously required when registers were over-allocated.

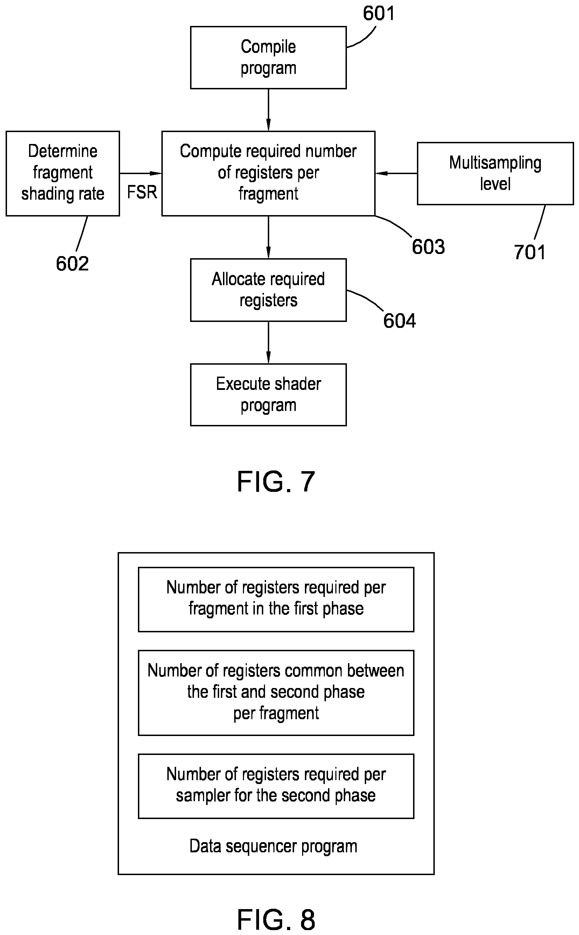

The example described in conjunction with Figure 6 assumes that there is one sample point per pixel in the fragment. However, in some embodiments there may be a plurality of sample points per pixel: this is known as the multisampling level. For more sampling points more registers may be needed in the second phase of the dual phase task and Figure 7 depicts a method in which there are a plurality of sample points per pixel. As can be seen, the multisampling level is also used in the calculation of the number of registers required. Where there are multiple sampling points per pixel (i.e. the multisampling level is not one) the number of samples per fragment will need to be computed as part of the calculation of the number of registers required for the second phase. The number of samples per fragment is the multisampling level multiplied by the fragment size (or fragment shading rate).

In particular, the number of registers per fragment = Max (number of registers per fragment in the first phase, the number of common registers + number of registers per sample * multisampling level * fragment shading rate).

If the number of registers required per fragment for the second phase becomes too large (for example because the fragment shading rate is high and the multisampling level is high) very large numbers of registers would be used. In some embodiments a maximum number of registers for the second phase is set. If the maximum number of registers for the second phase is 256 the number of registers per fragment may be written as: number of registers per fragment = Max (number of registers per fragment in the first phase, Min (256, the number of common registers + number of registers per sample * number of samples per fragment)). If the number of registers required exceeds the maximum number of registers then the content of excess registers is stored in memory and retrieved when required.

Figure 8 depicts a data sequencer program for the scenario in which the data fields required for calculating the number of registers to allocate are supplied to the data sequencer unit as part of the data sequencer program. This may be generated, by the compiler, while the shader program is being compiled. Although it may include many more fields it includes at least the following fields:
the first data field relates to the number of registers required per fragment in the first phase;
the second data field relates to the number of registers common between the first and second phase per fragment; and
the number of registers required per sample for the second phase.

In accordance with one of the alternatives discussed above, such a data sequencer program, generated by the compiler, may be transmitted to the data sequencer where the fields may be used to compute the number of registers required per fragment.

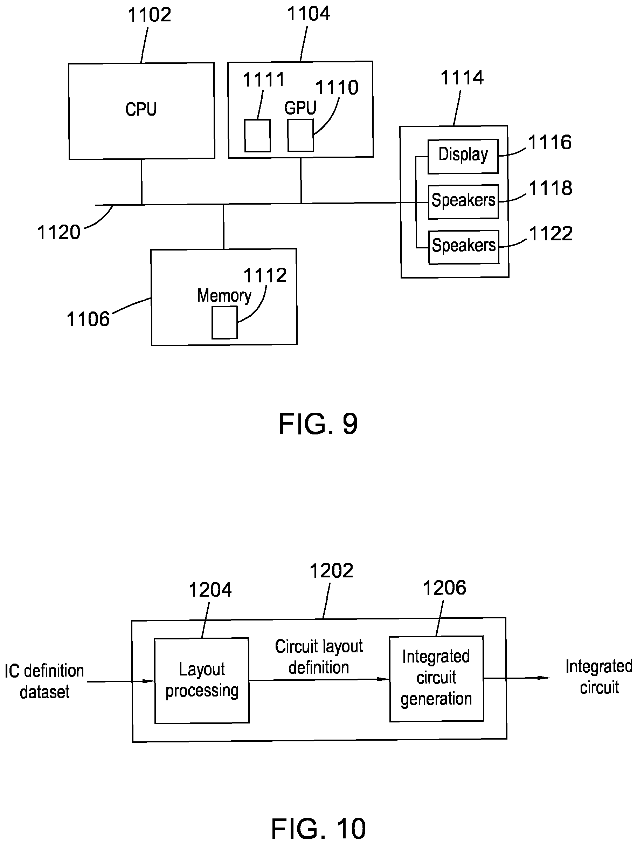

Figure 9 shows a computer system in which the graphics processing systems described herein may be implemented. The computer system comprises a CPU 1102, a GPU 1104, a memory 1106, a neural network accelerator (NNA) 1108 and other devices 1114, such as a display 1116, speakers 1118 and a camera 1122. A processing block 1110 (corresponding to processing blocks 104 and 106) is implemented on the GPU 1104. In other examples, one or more of the depicted components may be omitted from the system, and/or the processing block 1110 may be implemented on the CPU 1102 or within the NNA 1108. The components of the computer system can communicate with each other via a communications bus 1120. A store 1112 (corresponding to memory 102) is implemented as part of the memory 1106.

The graphics processing system of Figure 1 is shown as comprising a number of functional blocks. This is schematic only and is not intended to define a strict division between different logic elements of such entities. Each functional block may be provided in any suitable manner. It is to be understood that intermediate values described herein as being formed by a graphics processing system need not be physically generated by the graphics processing system at any point and may merely represent logical values which conveniently describe the processing performed by the graphics processing system between its input and output.

The graphics processing systems described herein may be embodied in hardware on an integrated circuit. The graphics processing systems described herein may be configured to perform any of the methods described herein. Generally, any of the functions, methods, techniques or components described above can be implemented in software, firmware, hardware (e.g., fixed logic circuitry), or any combination thereof. The terms "module," "functionality," "component", "element", "unit", "block" and "logic" may be used herein to generally represent software, firmware, hardware, or any combination thereof. In the case of a software implementation, the module, functionality, component, element, unit, block or logic represents program code that performs the specified tasks when executed on a processor. The algorithms and methods described herein could be performed by one or more processors executing code that causes the processor(s) to perform the algorithms/methods. Examples of a computer-readable storage medium include a random-access memory (RAM), read-only memory (ROM), an optical disc, flash memory, hard disk memory, and other memory devices that may use magnetic, optical, and other techniques to store instructions or other data and that can be accessed by a machine.

The terms computer program code and computer readable instructions as used herein refer to any kind of executable code for processors, including code expressed in a machine language, an interpreted language or a scripting language. Executable code includes binary code, machine code, bytecode, code defining an integrated circuit (such as a hardware description language or netlist), and code expressed in a programming language code such as C, Java or OpenCL. Executable code may be, for example, any kind of software, firmware, script, module or library which, when suitably executed, processed, interpreted, compiled, executed at a virtual machine or other software environment, cause a processor of the computer system at which the executable code is supported to perform the tasks specified by the code.

A processor, computer, or computer system may be any kind of device, machine or dedicated circuit, or collection or portion thereof, with processing capability such that it can execute instructions. A processor may be or comprise any kind of general purpose or dedicated processor, such as a CPU, GPU, NNA, System-on-chip, state machine, media processor, an application-specific integrated circuit (ASIC), a programmable logic array, a field-programmable gate array (FPGA), or the like. A computer or computer system may comprise one or more processors.

It is also intended to encompass software which defines a configuration of hardware as described herein, such as HDL (hardware description language) software, as is used for designing integrated circuits, or for configuring programmable chips, to carry out desired functions. That is, there may be provided a computer readable storage medium having encoded thereon computer readable program code in the form of an integrated circuit definition dataset that when processed (i.e. run) in an integrated circuit manufacturing system configures the system to manufacture a graphics processing system configured to perform any of the methods described herein, or to manufacture a graphics processing system comprising any apparatus described herein. An integrated circuit definition dataset may be, for example, an integrated circuit description.

Therefore, there may be provided a method of manufacturing, at an integrated circuit manufacturing system, a graphics processing system as described herein. Furthermore, there may be provided an integrated circuit definition dataset that, when processed in an integrated circuit manufacturing system, causes the method of manufacturing a graphics processing system to be performed.

An integrated circuit definition dataset may be in the form of computer code, for example as a netlist, code for configuring a programmable chip, as a hardware description language defining hardware suitable for manufacture in an integrated circuit at any level, including as register transfer level (RTL) code, as high-level circuit representations such as Verilog or VHDL, and as low-level circuit representations such as OASIS (RTM) and GDSII. Higher level representations which logically define hardware suitable for manufacture in an integrated circuit (such as RTL) may be processed at a computer system configured for generating a manufacturing definition of an integrated circuit in the context of a software environment comprising definitions of circuit elements and rules for combining those elements in order to generate the manufacturing definition of an integrated circuit so defined by the representation. As is typically the case with software executing at a computer system so as to define a machine, one or more intermediate user steps (e.g. providing commands, variables etc.) may be required in order for a computer system configured for generating a manufacturing definition of an integrated circuit to execute code defining an integrated circuit so as to generate the manufacturing definition of that integrated circuit.

An example of processing an integrated circuit definition dataset at an integrated circuit manufacturing system so as to configure the system to manufacture a graphics processing system will now be described with respect to Figure 10.

Figure 10 shows an example of an integrated circuit (IC) manufacturing system 1202 which is configured to manufacture a graphics processing system as described in any of the examples herein. In particular, the IC manufacturing system 1202 comprises a layout processing system 1204 and an integrated circuit generation system 1206. The IC manufacturing system 1202 is configured to receive an IC definition dataset (e.g. defining a graphics processing system as described in any of the examples herein), process the IC definition dataset, and generate an IC according to the IC definition dataset (e.g. which embodies a graphics processing system as described in any of the examples herein). The processing of the IC definition dataset configures the IC manufacturing system 1202 to manufacture an integrated circuit embodying a graphics processing system as described in any of the examples herein.

The layout processing system 1204 is configured to receive and process the IC definition dataset to determine a circuit layout. Methods of determining a circuit layout from an IC definition dataset are known in the art, and for example may involve synthesising RTL code to determine a gate level representation of a circuit to be generated, e.g. in terms of logical components (e.g. NAND, NOR, AND, OR, MUX and FLIP-FLOP components). A circuit layout can be determined from the gate level representation of the circuit by determining positional information for the logical components. This may be done automatically or with user involvement in order to optimise the circuit layout. When the layout processing system 1204 has determined the circuit layout it may output a circuit layout definition to the IC generation system 1206. A circuit layout definition may be, for example, a circuit layout description.

The IC generation system 1206 generates an IC according to the circuit layout definition, as is known in the art. For example, the IC generation system 1206 may implement a semiconductor device fabrication process to generate the IC, which may involve a multiple-step sequence of photo lithographic and chemical processing steps during which electronic circuits are gradually created on a wafer made of semiconducting material. The circuit layout definition may be in the form of a mask which can be used in a lithographic process for generating an IC according to the circuit definition. Alternatively, the circuit layout definition provided to the IC generation system 1206 may be in the form of computer-readable code which the IC generation system 1206 can use to form a suitable mask for use in generating an IC.

The different processes performed by the IC manufacturing system 1202 may be implemented all in one location, e.g. by one party. Alternatively, the IC manufacturing system 1202 may be a distributed system such that some of the processes may be performed at different locations, and may be performed by different parties. For example, some of the stages of: (i) synthesising RTL code representing the IC definition dataset to form a gate level representation of a circuit to be generated, (ii) generating a circuit layout based on the gate level representation, (iii) forming a mask in accordance with the circuit layout, and (iv) fabricating an integrated circuit using the mask, may be performed in different locations and/or by different parties.

In other examples, processing of the integrated circuit definition dataset at an integrated circuit manufacturing system may configure the system to manufacture a graphics processing system without the IC definition dataset being processed so as to determine a circuit layout. For instance, an integrated circuit definition dataset may define the configuration of a reconfigurable processor, such as an FPGA, and the processing of that dataset may configure an IC manufacturing system to generate a reconfigurable processor having that defined configuration (e.g. by loading configuration data to the FPGA).

In some embodiments, an integrated circuit manufacturing definition dataset, when processed in an integrated circuit manufacturing system, may cause an integrated circuit manufacturing system to generate a device as described herein. For example, the configuration of an integrated circuit manufacturing system in the manner described above with respect to Figure 9 by an integrated circuit manufacturing definition dataset may cause a device as described herein to be manufactured.

In some examples, an integrated circuit definition dataset could include software which runs on hardware defined at the dataset or in combination with hardware defined at the dataset. In the example shown in Figure 10, the IC generation system may further be configured by an integrated circuit definition dataset to, on manufacturing an integrated circuit, load firmware onto that integrated circuit in accordance with program code defined at the integrated circuit definition dataset or otherwise provide program code with the integrated circuit for use with the integrated circuit.

The implementation of concepts set forth in this application in devices, apparatus, modules, and/or systems (as well as in methods implemented herein) may give rise to performance improvements when compared with known implementations. The performance improvements may include one or more of increased computational performance, reduced latency, increased throughput, and/or reduced power consumption. During manufacture of such devices, apparatus, modules, and systems (e.g. in integrated circuits) performance improvements can be traded-off against the physical implementation, thereby improving the method of manufacture. For example, a performance improvement may be traded against layout area, thereby matching the performance of a known implementation but using less silicon. This may be done, for example, by reusing functional blocks in a serialised fashion or sharing functional blocks between elements of the devices, apparatus, modules and/or systems. Conversely, concepts set forth in this application that give rise to improvements in the physical implementation of the devices, apparatus, modules, and systems (such as reduced silicon area) may be traded for improved performance. This may be done, for example, by manufacturing multiple instances of a module within a predefined area budget.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein. In view of the foregoing description it will be evident to a person skilled in the art that various modifications may be made within the scope of the invention

## Claims

1. A method of rendering in a graphics processing system, the method comprising:
compiling a program for a dual phase fragment task by a compiler, the first phase of the program being executed at a fragment rate and the second phase or the program being executed at a sample rate, the compiler being configured to determine data comprising the number of registers required per fragment in the first phase, the number of registers common between the first and second phase per fragment and the number of registers required per sample for the second phase to a processor;
providing, by the compiler to a processor, the compiled program and data comprising the number of registers required per fragment in the first phase, the number of registers common between the first and second phase per fragment and the number of registers required per sample for the second phase;
obtaining, by the processor, a fragment shading rate value;
computing, by the processor, the number of registers needed per fragment based on at least the number of registers required per fragment in the first phase, the number of registers per fragment common between the first and second phase and the number of registers required per sample for the second phase in the compiled program and the fragment shading rate value.

2. A method according to claim 1 further comprising allocating the computed number of registers to the dual phase fragment task for each fragment.

3. A method according to any one of the preceding claims wherein the number of registers required per fragment is the maximum of:
the registers required per fragment in the first phase; and
the number of registers required per fragment for the second phase wherein the number of registers required for the second phase comprises registers per fragment common between the first and second phase plus the number of registers required per sample for the second phase in the compiled program multiplied by the samples per fragment, wherein the samples per fragment is based on the fragment shading rate value.

4. A method according to claim 3 wherein each fragment has a multisampling level per pixel, the method further comprising:
providing a multisampling level per pixel to the processor,
and wherein the samples per fragment comprises the multisampling level per pixel multiplied by the fragment size.

5. A method according to any one of the preceding claims wherein computing the number of registers further comprises setting a maximum number of registers required per fragment in the second phase.

6. A method according to any one of the preceding claims further comprising:
obtaining, by the processor, a second fragment shading rate value to the processor;
computing, by the processor, the number of registers needed per fragment for a second execution of the program based on the number of registers required per fragment in the first phase, the number of registers per fragment common between the first and second phase and the number of registers required per sample for the second phase in the compiled program and the second fragment shading rate value.

7. A method according to any one of the preceding claims wherein the compiler provides a plurality of data fields, distinct from the compiled program, to the processor, the data fields comprising:
the number of registers required per fragment in the first phase;
the number of registers common between the first and second phase per fragment; and
the number of registers required per sample for the second phase.

8. A graphics processing system configured to render a scene formed of primitives, wherein the graphics processing system comprises logic configured to:
compile for a dual phase fragment task by a compiler, the first phase of the program being executed at a fragment rate and the second phase or the program being executed at a sample rate, the compiler being configured to provide the number of registers required per fragment in the first phase, the number of registers common between the first and second phase per fragment and the number of registers required per sample for the second phase;
provide the compiled program to a processor, the compiled program and data comprising the number of registers required per fragment in the first phase, the number of registers common between the first and second phase per fragment and the number of registers required per sample for the second phase;
provide a fragment shading rate value to the processor;
compute, by the processor, the number of registers needed per fragment based on the number of registers required per fragment in the first phase, the number of registers per fragment common between the first and second phase and the number of registers required per sample for the second phase in the compiled program and the fragment shading rate value.

9. A graphics processing system according to claim 8 wherein the number of registers required per fragment is the maximum of:
the registers required per fragment in the first phase; and
the number of registers required per fragment for the second phase wherein the number of registers required for the second phase comprises registers per fragment common between the first and second phase plus the number of registers required per sample for the second phase in the compiled program multiplied by the samples per fragment, wherein the samples per fragment is based on the fragment shading rate value.

10. A graphics processing system according to any one of claims 8 to 9 wherein the logic is further configured to:
provide a second fragment shading rate value to the processor;
compute, by the processor, the number of registers needed per fragment for a second execution of the program based on the number of registers required per fragment in the first phase, the number of registers per fragment common between the first and second phase and the number of registers required per sample for the second phase in the compiled program and the second fragment shading rate value.

11. A graphics processing system according to any one of claims 8 to 10 comprising:
a CPU configured to compile the dual phase fragment task; and
a GPU configured to compute the number of registers needed

12. A graphics processing system configured to perform the method of any of claims 1 to 7.

13. The graphics processing system of any one of claims 8 to 12 wherein the graphics processing system is embodied in hardware on an integrated circuit.

14. Computer readable code configured to cause the method of any of claims 1 to 7 to be performed when the code is run.

15. A computer readable storage medium having encoded thereon the computer readable code of claim 14.
